# EUROPÄISCHE PATENTSCHRIFT

(11) **EP 4 251 877 B1**
(45) Veröffentlichungstag und Bekanntmachung des Hinweises auf die Patenterteilung: **24.09.2025**
(21) Anmeldenummer: 21823731.1
(22) Anmeldetag: 29.11.2021
(51) Int. Cl.: F03D 80/70, F16C 17/03, F16C 17/06, F16C 33/10, F16C 33/26

(54) **GLEITLAGERPAD UND EINE GLEITLAGERUNG, SOWIE EINE MIT DER GLEITLAGERUNG AUSGESTATTETE GONDEL FÜR EINE WINDKRAFTANLAGE**
PLAIN BEARING PAD AND PLAIN BEARING ARRANGEMENT, AND NACELLE EQUIPPED WITH A PLAIN BEARING ARRANGEMENT FOR A WIND TURBINE
PATIN DE PALIER LISSE ET AGENCEMENT DE PALIER LISSE, ET NACELLE ÉQUIPÉE D'UN AGENCEMENT DE PALIER LISSE POUR UNE ÉOLIENNE

(30) Priorität: 30.11.2020 AT 510442020; 08.04.2021 AT 502592021; 28.05.2021 AT 504322021
(43) Veröffentlichungstag der Anmeldung: 04.10.2023
(73) Patentinhaber: Miba Gleitlager Austria GmbH, 4663 Laakirchen (AT)
(72) Erfinder: LAUBICHLER, Patrick, 4810 Gmunden (AT); HÖLZL, Johannes, 4880 Berg im Attergau (AT)
(74) Vertreter: Burger, Hannes
(86) Internationale Anmeldenummer: PCT/AT2021/060452
(87) Internationale Veröffentlichungsnummer: WO 2022/109649

(56) Entgegenhaltungen:
- EP-A1- 2 762 735
- EP-A1- 3 252 306
- DE-B3- 102013 211 710
- JP-A- 2000 274 432
- US-A1- 2015 252 839

## Beschreibung

Die Erfindung betrifft ein Gleitlagerpad und eine Gleitlagerung, sowie eine mit der Gleitlagerung ausgestattete Gondel für eine Windkraftanlage.

Aus der WO 2011/127510 A1 ist ein Lagerelement für die Lagerung der Rotornabe einer Windkraftanlage bekannt.

Weitere Lagerelemente sind aus der DE 10 2013 211710 B3, der EP 3 252 306 A1, der EP 2 762 735 A1, der JP 2000 274432 A und der US 2015/252839 A1 bekannt. Die DE 10 2013 211710 B3, EP 3 252 306 A1, EP 2 762 735 A1 und JP 2000 274432 A offenbaren ein Gleitlagerpad gemäß dem Oberbegriff des Anspruchs 1.

Aufgabe der vorliegenden Erfindung war es, eine verbesserte Gleitlagerung zur Verfügung zu stellen.

Diese Aufgabe wird durch eine Vorrichtung gemäß den Ansprüchen gelöst.

Erfindungsgemäß ist ein Gleitlagerpad für eine Gleitlagerung ausgebildet, wobei das Gleitlagerpad eine Lagerfläche aufweist. An einer ersten Umfangsseite des Gleitlagerpads ist im Bereich der Lagerfläche eine Schmieröltransportnut ausgebildet, wobei das Gleitlagerpad zum Anordnen zwischen einem inneren Ringelement und einem äußeren Ringelement dient, wobei das Gleitlagerpad dazu ausgebildet ist, im Betriebszustand fest mit dem inneren Ringelement gekoppelt zu sein und sich mit diesem relativ zum äußeren Ringelement zu drehen, wobei die Lagerfläche des Gleitlagerpads zur Anlage an einer Gegenfläche des äußeren Ringelements ausgebildet ist, wobei sich die Schmieröltransportnut in einer Axialrichtung des Gleitlagerpads erstreckt, wobei die Schmieröltransportnut ein erstes Nutende aufweist, welches in einem ersten Abstand von einer ersten Stirnseite des Gleitlagerpads angeordnet ist und ein zweites Nutende aufweist, welches in einem zweiten Abstand von einer zweiten Stirnseite des Gleitlagerpads angeordnet ist, wobei zwischen dem ersten Nutende und der ersten Stirnseite des Gleitlagerpads eine erste Vertiefung bezüglich der Lagerfläche ausgebildet ist und wobei zwischen dem zweiten Nutende und der zweiten Stirnseite des Gleitlagerpads eine zweite Vertiefung bezüglich der Lagerfläche ausgebildet ist.

Eine derartige Schmieröltransportnut bringt den Vorteil mit sich, dass mittels der Schmieröltransportnut das Schmieröl von einem Schmierölreservoir nach oben befördert werden kann und somit über eine Gegenfläche des Ringelements verteilt werden kann. Dadurch kann eine verbesserte Schmierwirkung im Gleitlager erreicht werden, um die Lebensdauer des Gleitlagers zu erhöhen. Darüber hinaus kann durch diese Maßnahmen auf eine Schmierölpumpe verzichtet werden.

Weiters kann es zweckmäßig sein, wenn die Schmieröltransportnut eine radiale Nuttiefe und eine umfängliche Nuttiefe aufweist, wobei die umfängliche Nuttiefe zwischen 10% und 300%, insbesondere zwischen 20% und 100%, bevorzugt zwischen 60% und 80% der radialen Nuttiefe beträgt. Besonders eine derart dimensionierte Schmieröltransportnut eignet sich überraschend gut für den Transport des Schmieröles.

Darüber hinaus ist es denkbar, dass die radiale Nuttiefe zwischen 1mm und 30mm, insbesondere zwischen 3mm und 18mm, bevorzugt zwischen 6mm und 13mm beträgt.

Weiters kann vorgesehen sein, dass die umfängliche Nuttiefe zwischen 1mm und 30mm, insbesondere zwischen 2mm und 18mm, bevorzugt zwischen 4mm und 8mm beträgt.

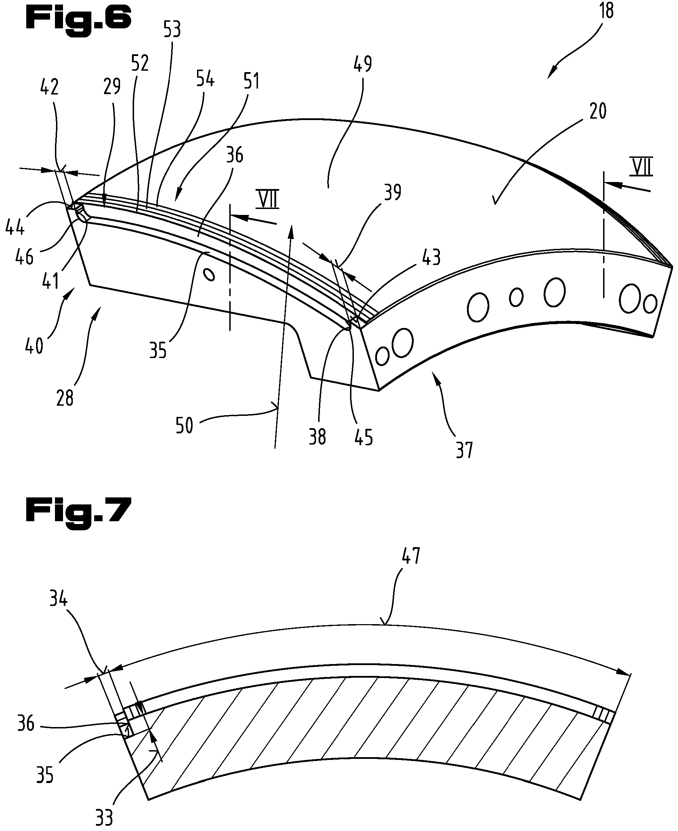

Ferner kann vorgesehen sein, ein radialer Nutgrund in einem Nutquerschnitt gesehen als Gerade ausgebildet ist. Eine derartige Schnittansicht ist in Fig. 7 dargestellt. Insbesondere kann vorgesehen sein, dass ein derartiger Nutgrund als Zylidersegment oder als Konussegment ausgebildet ist. Dies bringt den Vorteil mit sich, dass eine derart ausgebildete Schmieröltransportnut einfach herzustellen ist. Insbesondere kann eine derart ausgebildete Nut mittels eines Fräsers hergestellt werden.

Darüber hinaus kann vorgesehen sein, ein umfänglicher Nutgrund in einem Nutquerschnitt gesehen als Gerade ausgebildet ist. Dies bringt den Vorteil mit sich, dass eine derart ausgebildete Schmieröltransportnut einfach herzustellen ist. Insbesondere kann eine derart ausgebildete Nut mittels eines Fräsers hergestellt werden.

Vorteilhaft ist auch eine Ausprägung, gemäß welcher vorgesehen sein kann, sich die Schmieröltransportnut in einer Axialrichtung des Gleitlagerpads erstreckt. Durch diese Maßnahme kann die Volumenleistung der Schmieröltransportnut verbessert werden.

Erfindungsgemäß weist die Schmieröltransportnut ein erstes Nutende auf, welches in einem ersten Abstand von einer ersten Stirnseite des Gleitlagerpads angeordnet ist und ein zweites Nutende aufweist, welches in einem zweiten Abstand von einer zweiten Stirnseite des Gleitlagerpads angeordnet ist. Dies bringt den Vorteil mit sich, dass durch diese Maßnahme die Schmieröltransportnut an deren Axialenden abgeschlossen sein kann und somit die Transportleistung der Schmieröltransportnut verbessert werden kann.

Erfindungsgemäß, ist zwischen dem ersten Nutende und der ersten Stirnseite des Gleitlagerpads eine erste Vertiefung bezüglich der Lagerfläche ausgebildet und zwischen dem zweiten Nutende und der zweiten Stirnseite des Gleitlagerpads ist eine zweite Vertiefung bezüglich der Lagerfläche ausgebildet.

Dies bringt den Vorteil mit sich, dass durch die Vertiefungen Schmieröl aus dem Schmierölsumpf in Axialrichtung in die Nut einströmen kann, um eine ausreichende Schmierölversorgung zu erreichen.

Weiters ist es denkbar, dass eine Tiefe der ersten Vertiefung zwischen 2% und 50%, insbesondere zwischen 5% und 30%, bevorzugt zwischen 8% und 15% der radialen Nuttiefe beträgt.

Weiters ist es denkbar, dass eine Tiefe der zweiten Vertiefung zwischen 2% und 50%, insbesondere zwischen 5% und 30%, bevorzugt zwischen 8% und 15% der radialen Nuttiefe beträgt. Besonders bei einer derart ausgebildeten Schmieröltransportnut kann eine überraschend gute Schmierung der Gleitlagerflächen erreicht werden.

Darüber hinaus kann vorgesehen sein, die Schmieröltransportnut am ersten Nutende einen ersten Übergangsradius zum radialen Nutgrund aufweist und dass die Schmieröltransportnut am zweiten Nutende einen zweiten Übergangsradius zum radialen Nutgrund aufweist. Dies bringt den Vorteil mit sich, dass in einer derart ausgebildeten Schmieröltransportnut das Schmieröl gut gehalten werden kann. Darüber hinaus kann eine derart ausgebildete Schmieröltransportnut einfach hergestellt werden.

Weiters kann vorgesehen sein, dass der Übergangsradius zwischen 1mm und 20mm, insbesondere zwischen 3mm und 15mm, bevorzugt zwischen 5mm und 7mm beträgt.

In einer alternativen Ausführungsvariante kann vorgesehen sein, dass die Schmieröltransportnut am ersten Nutende einen ersten Übergangsradius zum umfänglichen Nutgrund aufweist und dass die Schmieröltransportnut am zweiten Nutende einen zweiten Übergangsradius zum umfänglichen Nutgrund aufweist. Dies bringt den Vorteil mit sich, dass in einer derart ausgebildeten Schmieröltransportnut das Schmieröl gut gehalten werden kann. Darüber hinaus kann eine derart ausgebildete Schmieröltransportnut einfach hergestellt werden.

Weiters kann vorgesehen sein, dass der radiale Nutgrund der Schmieröltransportnut einzelne Teilbereiche aufweist, wobei die einzelnen Teilbereiche jeweils eine ebene Fläche aufweisen.

Weiters kann vorgesehen sein, dass die Lagerfläche der einzelnen Gleitlagerpads in einem Kugelkalottenabschnitt die Grundform einer Kugelkalotte mit einem Kugelkalottenradius aufweist. Besonders bei derart ausgebildeten Gleitlagerpads mit derart ausgebildeten Gleitflächen bringt die erfindungsgemäße Schmieröltransportnut überraschend verbesserte Gleiteigenschaften mit sich.

Gemäß einer besonderen Ausprägung ist es möglich, dass die umfängliche Nuttiefe zwischen 0,5% und 20%, insbesondere zwischen 1,5% und 10%, bevorzugt zwischen 3% und 7% einer Lagerflächenbogenlänge der Lagerfläche beträgt. Dies bringt den Vorteil mit sich, dass eine derart ausgebildete Schmieröltransportnut sich gut für den Schmieröltransport eignet.

Weiters kann vorgesehen sein, dass zwischen der Schmieröltransportnut und der Lagerfläche ein Schmieröleinzug ausgebildet ist. Dies bringt den Vorteil mit sich, dass das Schmieröl verbessert von der Schmieröltransportnut in den Bereich der Lagerfläche eingezogen werden kann. Insbesondere kann vorgesehen sein, dass der Schmieröleinzug sich ausgehend von der Schmieröltransportnut verjüngend ausgebildet ist.

In einer ersten Ausführungsvariante kann vorgesehen sein, dass der Schmieröleinzug gestuft ausgebildet ist. Insbesondere können unterschiedliche Abstufungsebenen vorgesehen sein, wobei die der Schmieröltransportnut nächstliegende Abstufungsebene die größte Tiefe aufweist und wobei die der Lagerfläche nächstliegende Abstufungsebene die geringste Tiefe aufweist.

In einer weiteren Ausführungsvariante kann vorgesehen sein, dass der Schmieröleinzug im Querschnitt gesehen in Form einer Rundung ausgebildet ist. Insbesondere kann vorgesehen sein, dass die Rundung im Bereich der Schmieröltransportnut die größte Tiefe aufweist und tangential in die Lagerfläche übergeht.

In einer weiteren Ausführungsvariante kann vorgesehen sein, dass der Schmieröleinzug im Querschnitt gesehen in Form einer Keilfläche ausgebildet ist.

Erfindungsgemäß ist eine Gleitlagerung ausgebildet. Die Gleitlagerung umfasst:
- ein inneres Ringelement;
- ein äußeres Ringelement;
- zumindest ein Gleitlagerelement, welches zwischen dem inneren Ringelement und dem äußeren Ringelement angeordnet ist, wobei das Gleitlagerelement zumindest zwei Gleitlagerpads umfasst,
wobei eine Lagerfläche des Gleitlagerpads und eine Gegenfläche des äußeren Ringelements oder eine Gegenfläche des inneren Ringelementes aneinander anliegen. Das Gleitlagerpad ist nach einer der obigen Ausprägungen ausgebildet.

Eine derart ausgebildete Gleitlagerung weist eine überraschend hohe Lebensdauer und eine überraschend gute Lauffähigkeit auf.

Erfindungsgemäß ist vorgesehen, dass die Gleitlagerpads mit dem inneren Ringelement gekoppelt sind und dass die Gegenlauffläche am äußeren Ringelement ausgebildet ist.

In einem alternativen Ausführungsbeispiel nicht Teil der Erfindung kann vorgesehen sein, dass die Gleitlagerpads mit dem äußeren Ringelement gekoppelt sind und dass die Gegenlauffläche am inneren Ringelement ausgebildet ist.

Insbesondere kann es vorteilhaft sein, wenn an einem Außenumfang des äußeren Ringelementes eine umlaufende Schmierölverteilungsnut ausgebildet ist, wobei eine Schmierölbohrung ausgebildet ist, welche die Schmierölverteilungsnut mit der Gegenfläche strömungsverbindet, wobei im Bereich der Gegenfläche die Schmierölbohrung in eine Öltasche einmündet. Durch diese Maßnahme kann die Schmierölversorgung des Gleitlagers weiter verbessert werden.

Erfindungsgemäß ist eine Gondel für eine Windkraftanlage ausgebildet. Die Gondel umfasst:
- ein Gondelgehäuse;
- eine Rotorwelle;
- eine Rotornabe, welche an der Rotorwelle angeordnet ist;
- eine Rotorlagerung zur Lagerung der Rotorwelle am Gondelgehäuse. Die Rotorlagerung umfasst mehrere Gleitlagerpads, welche nach einer der obigen Ausprägungen ausgebildet sind.

Weiters kann es zweckmäßig sein, wenn die einzelnen Gleitlagerpads in einem Kugelkalottenabschnitt die Grundform einer Kugelkalotte mit einem Kugelkalottenradius aufweisen und in einem Übergangsabschnitt einen Übergangsradius aufweisen.

Insbesondere kann es vorteilhaft sein, wenn ein Lagerbock ausgebildet ist, in welchem das äußere Ringelement aufgenommen ist, wobei zumindest an einer Axialstirnseite des Lagerbockes ein Deckel ausgebildet ist, wobei im Deckel integriert oder an den Deckel angeschlossen ein Schmierölreservoir ausgebildet ist. Dies bringt den Vorteil mit sich, dass in einem derart ausgebildeten Schmierölreservoir ausreichend Schmieröl für ein hydrodynamisches Gleitlager bevorratet werden kann.

Gemäß einer besonderen Ausprägung ist es möglich, dass die Rotorlagerung einen Lagerbock umfasst, in welchem das äußere Ringelement aufgenommen ist, wobei der Lagerbock einen Axialanschlag für das äußere Ringelement aufweist, wobei der Axialanschlag an einer der Rotornabe abgewandten Axialstirnseite des Lagerbockes ausgebildet ist. Dies bringt den Vorteil mit sich, dass der Axialanschlag in einer Hauptbelastungsrichtung der Rotorlagerung wirkt.

Vorteilhaft ist auch eine Ausprägung, gemäß welcher vorgesehen sein kann, dass die Gleitlagerung als hydrodynamische Gleitlagerung ausgebildet ist. Besonders eine hydrodynamische Gleitlagerung weist einen geringen Reibwiederstand und somit eine hohe Effizienz auf.

Weiters kann vorgesehen sein, dass im Schmierölreservoir ein Dauermagnet angeordnet ist. Dies bringt den Vorteil mit sich, dass Partikel mit ferromagnetischen Eigenschaften am Dauermagnet anhaften können. Somit kann der Dauermagnet zum Sammeln von Verunreinigungen dienen. Derartige Verunreinigungen können beispielsweise durch Abrieb an den Gleitflächen oder durch sonstigen Verschleiß entstehen. Weiters ist es denkbar, dass der Dauermagnet austauschbar bzw. lösbar im Schmierölreservoir angeordnet ist, um ein Abreinigen des Dauermagneten zu ermöglichen.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: eine perspektivische Darstellung eines ersten Ausführungsbeispiels einer Gleitlagerung;
- Fig. 3: eine perspektivische Ansicht eines Längsschnittes des ersten Ausführungsbeispiels der Gleitlagerung;
- Fig. 4: eine perspektivische Ansicht des ersten Ausführungsbeispiels einer Rotorwelle mit daran angeordneten Gleitlagerpads;
- Fig. 5: ein Längsschnitt eines weiteren Ausführungsbeispiels der Gleitlagerung;
- Fig. 6: ein weiteres Ausführungsbeispiel eines Gleitlagerpads in einer perspektivischen Darstellung;
- Fig. 7: eine Schnittdarstellung des Gleitlagerpads gemäß der Schnittlinie VII-VII aus Fig. 6;
- Fig. 8: ein weiteres Ausführungsbeispiel eines Gleitlagerpads in einer perspektivischen Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

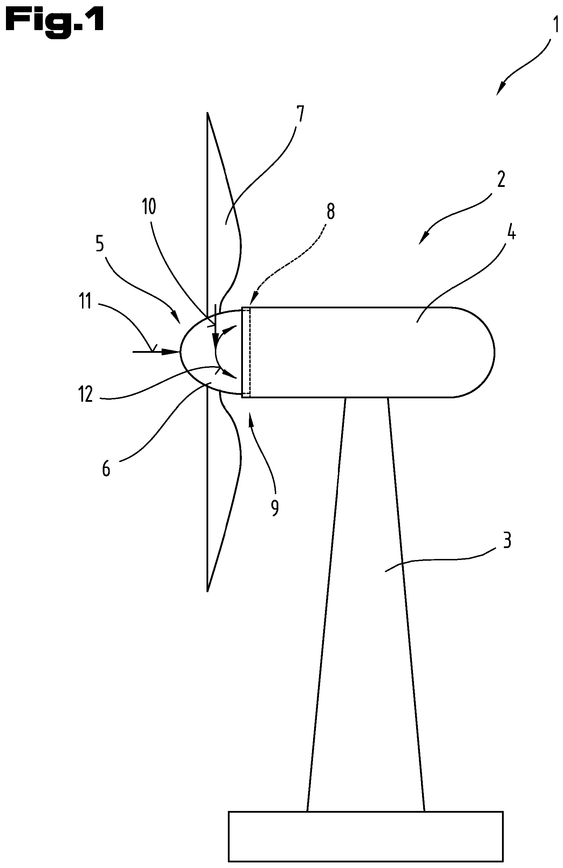

Fig. 1 zeigt in einer schematischen Darstellung ein erstes Ausführungsbeispiel einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen. Insbesondere ist vorgesehen, dass eine erfindungsgemäße und noch näher beschriebene Gleitlagerung 9 als Rotorlagerung 8 eingesetzt wird. Insbesondere kann vorgesehen sein, dass die Rotornabe 6 an einer Rotorwelle 16 angeordnet ist, wobei die Rotorwelle 16 in der Rotorlagerung 8 gelagert ist.

Die Rotorlagerung 8, welche zur Lagerung der Rotornabe 6 am Gondelgehäuse 4 der Gondel 2 dient, ist zur Aufnahme einer Radialkraft 10 und einer Axialkraft 11 ausgebildet. Die Axialkraft 11 ist bedingt durch die Kraft des Windes. Die Radialkraft 10 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 10 ein Kippmoment 12 hervorgerufen. Das Kippmoment 12 kann ebenfalls durch eine ungleichmäßige Belastung der Rotorblätter 7 hervorgerufen werden. Dieses Kippmoment 12 kann mittels einer zweiten Lagerung aufgenommen werden, welche in einem Abstand zur Rotorlagerung 8 angeordnet ist. Die zweite Lagerung kann beispielsweise im Bereich des Generators ausgebildet sein.

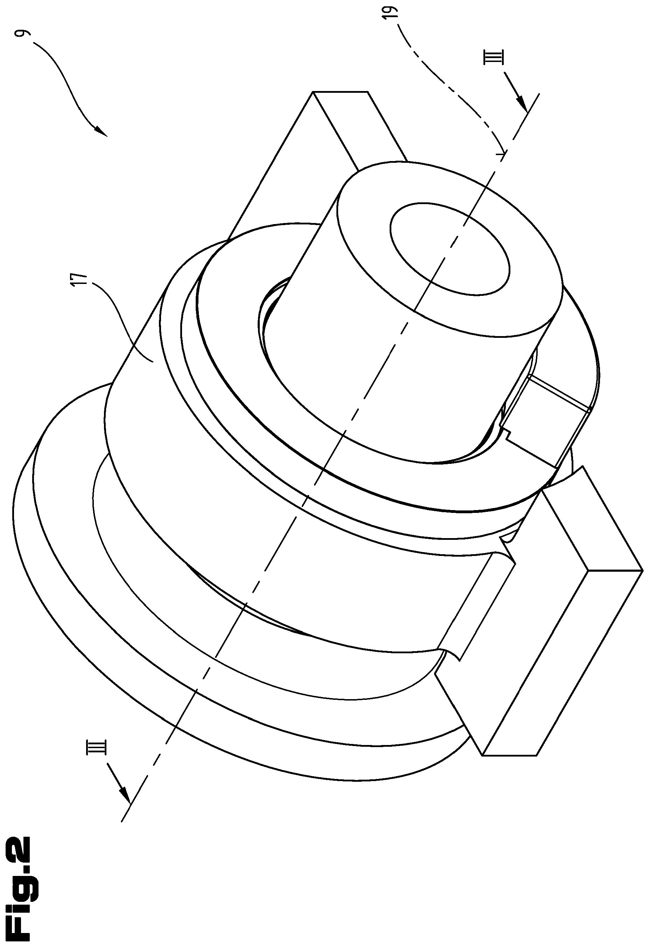

Fig. 2 zeigt ein erstes Ausführungsbeispiel der in der Gondel 2 verbauten Gleitlagerung 9. Natürlich kann die in Fig. 2 dargestellte Gleitlagerung 9 auch in sämtlichen anderen Industrieanwendungen außerhalb von Windkraftanlagen eingesetzt werden. Die Gleitlagerung 9 ist in Fig. 2 in einer perspektivischen Ansicht dargestellt.

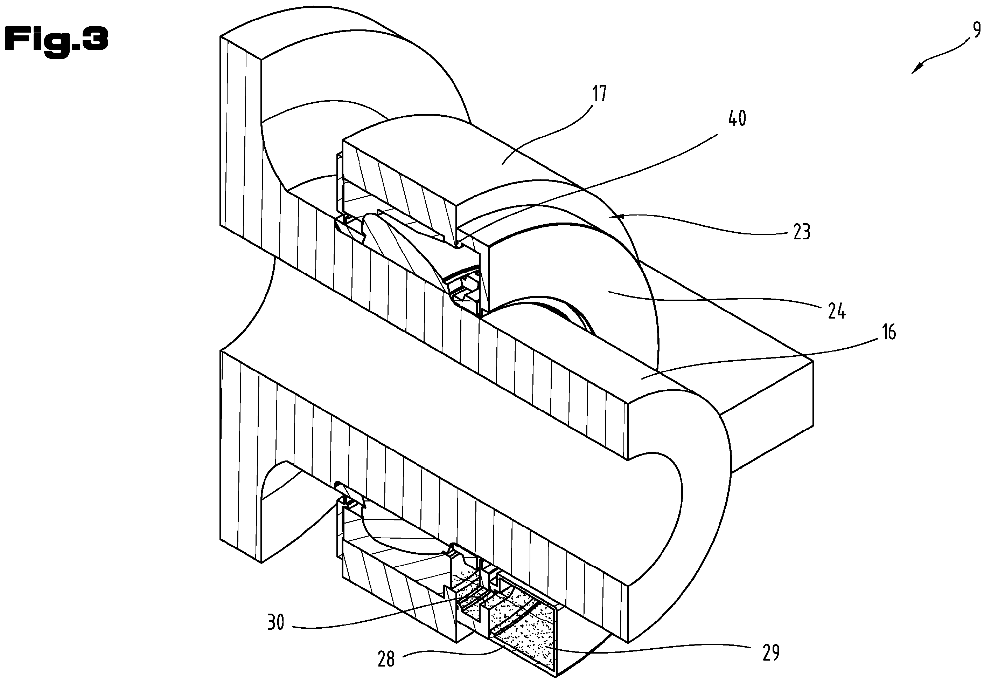

In Fig. 3 ist das erste Ausführungsbeispiel der Gleitlagerung 9 in einer in einer perspektivischen Schnittdarstellung gezeigt.

In weiterer Folge wird die Gleitlagerung 9 anhand einer Zusammenschau der Figuren 2 und 3 beschrieben.

Wie aus den Figuren 2 und 3 ersichtlich, weist die Gleitlagerung 9 ein inneres Ringelement 13 und ein äußeres Ringelement 14 auf. Zwischen dem inneren Ringelement 13 und dem äußeren Ringelement 14 ist ein Gleitlagerelement 15 angeordnet, welches zur rotatorischen Gleitlagerung des inneren Ringelementes 13 relativ zum äußeren Ringelement 14 dient.

Im Ausführungsbeispiel, welches in den Figuren 2 und 3 dargestellt ist, ist das innere Ringelement 13 als Rotorwelle 16 ausgebildet. Natürlich kann das innere Ringelement 13 auch eine sonstige Welle sein. Weiters ist es auch denkbar, dass das innere Ringelement 13 als eigenständiges Bauteil ausgebildet ist, welches an einer Welle, insbesondere einer Rotorwelle 16 aufgenommen ist.

Wie besonders gut aus Fig. 3 ersichtlich, kann vorgesehen sein, dass das äußere Ringelement 14 in einem Lagerbock 17 aufgenommen ist. Insbesondere kann vorgesehen sein, dass der Lagerbock 17 mit dem Gondelgehäuse 4 gekoppelt ist oder alternativ auch direkt im Gondelgehäuse 4 ausgeformt ist. Bei diesem Ausführungsbeispiel kann somit vorgesehen sein, dass das äußere Ringelement 14 starr mit dem Gondelgehäuse 4 gekoppelt ist und das innere Ringelement 13 mittels des Gleitlagerelementes 15 relativ zum äußeren Ringelement 14 bezüglich einer Rotationsachse 19 verdrehbar ist.

Weiters kann vorgesehen sein, dass der Lagerbock 17 direkt als äußeres Ringelement 14 dient.

Somit ist die Rotorwelle 16 mittels der Gleitlagerung 9 drehbar im Gondelgehäuse 4 aufgenommen.

Wie aus den Figuren 2 und 3 weiters ersichtlich, kann vorgesehen sein, dass das Gleitlagerelement 15 mehrere einzelne Gleitlagerpads 18 umfasst, welche über den Umfang verteilt zwischen dem inneren Ringelement 13 und dem äußeren Ringelement 14 angeordnet sind.

Die einzelnen Gleitlagerpads 18 sind durch den in Fig. 3 gezeigten Aufbau im Betriebszustand der Gleitlagerung 9 fest mit dem inneren Ringelement 13 gekoppelt und drehen sich somit mit diesem relativ zum äußeren Ringelement 14. Um die Drehbewegung zwischen dem inneren Ringelement 13 und dem äußeren Ringelement 14 zu ermöglichen, ist an den einzelnen Gleitlagerpads 18 jeweils eine Lagerfläche 20 ausgebildet, welche im einsatzbereiten Zustand der Gleitlagerung 9 an einer Gegenfläche 21 des äußeren Ringelementes 14 anliegt. Die Gegenfläche 21 ist an einer Innenseite 22 des äußeren Ringelements 14 angeordnet.

Die Lagerfläche 20 des Gleitlagerpads 18 und die Gegenfläche 21 des äußeren Ringelements 14 sind als Gleitflächen ausgebildet, welche im Betrieb der Gleitlagerung 9 aneinander gleiten. Insbesondere kann vorgesehen sein, dass die Gegenfläche 21 des äußeren Ringelementes 14 als harte, verschleißfeste Oberfläche ausgebildet ist, welche beispielsweise durch einen gehärteten Stahl gebildet sein kann. Die Lagerfläche 20 des Gleitlagerpads 18 kann aus einem im Vergleich zur Gegenfläche 21 weichen Gleitlagerwerkstoff gebildet sein. Natürlich ist es auch denkbar, dass die Lagerfläche 20 eine Gleitbeschichtung aufweist.

Wie aus Fig. 3 besonders gut ersichtlich, kann vorgesehen sein, dass die einzelnen Gleitlagerpads 18 jeweils eine in Axialrichtung gesehen gewölbte Lagerfläche 20 aufweisen.

Wie aus Fig. 3 weiters ersichtlich, kann vorgesehen sein, dass an einer Axialstirnseite 23 des Lagerbockes 17 ein Deckel 24 angeordnet ist. Der Deckel 24 dient zum Verschließen des Innenraumes des Lagerbockes 17.

Wie aus Fig. 3 weiters ersichtlich, kann vorgesehen sein, dass an dem Deckel 24 ein Schmierölreservoir 25 angeschlossen ist, welches zur Aufnahme von Schmieröl 26 dient. Insbesondere kann hierbei vorgesehen sein, dass im Deckel 24 eine Durchgangsöffnung 27 ausgebildet ist, durch welche das Schmieröl 26 vom Schmierölreservoir 25 in den Innenraum des Lagerbockes 17 strömen kann.

Natürlich ist es auch denkbar, dass das Schmierölreservoir 25 an einer anderen Stelle im Lagerbock 17 angeordnet ist.

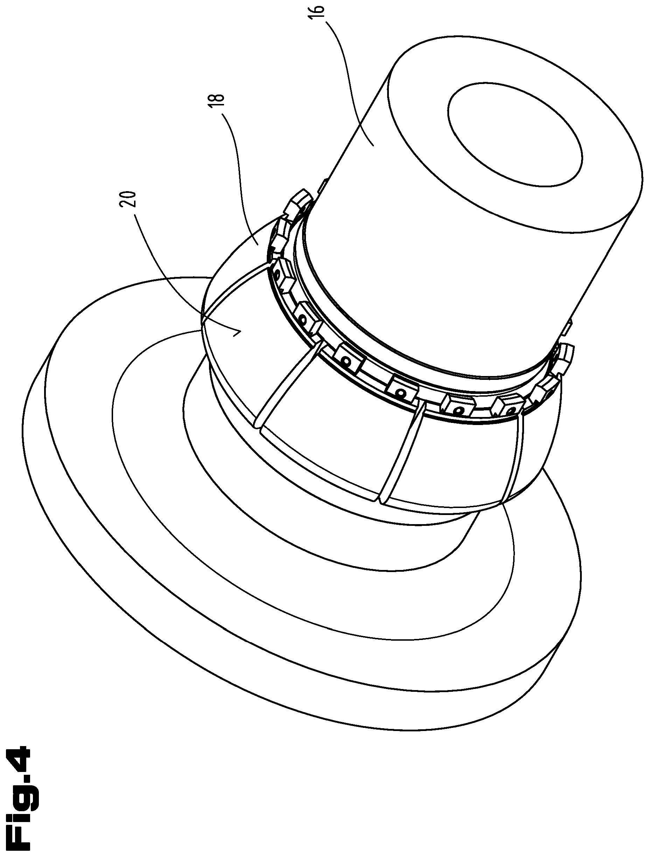

Fig. 4 zeigt die Rotorwelle 16 mit den daran angeordneten Gleitlagerpads 18 in einer perspektivischen Ansicht, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, können die einzelnen Gleitlagerpads 18 über den Umfang verteilt und in Umfangsrichtung zueinander beabstandet am inneren Ringelement 14 aufgenommen sein.

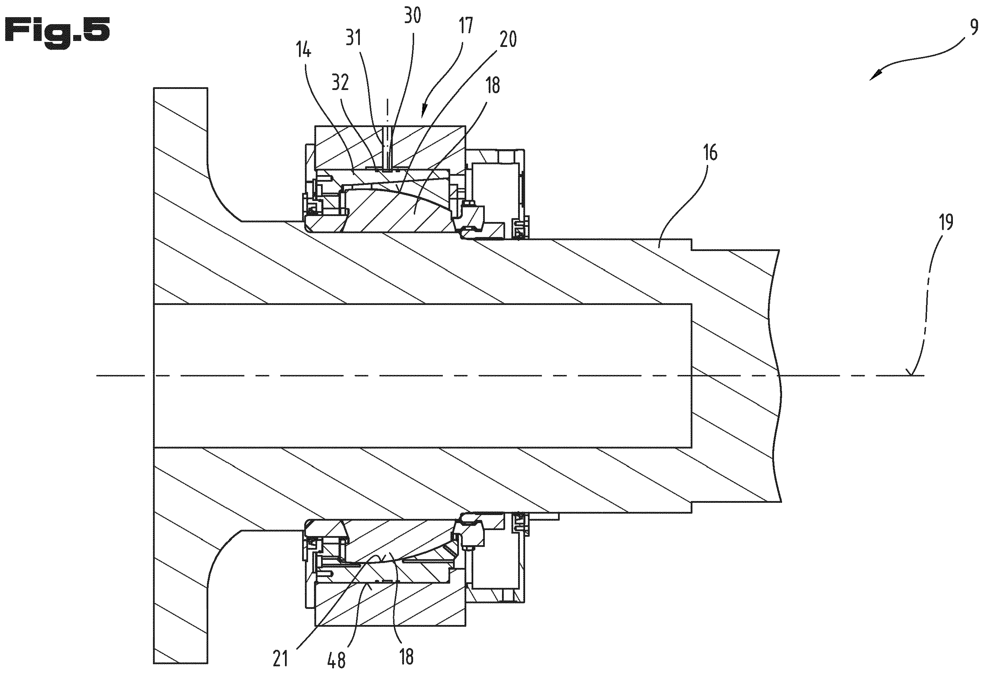

Wie aus Fig. 5 ersichtlich, kann vorgesehen sein, dass an einem Außenumfang des äußeren Ringelementes 14 eine umlaufende Schmierölverteilungsnut 30 ausgebildet ist. Die Schmierölverteilungsnut 30 kann an jener Fläche ausgebildet sein, an welcher das äußere Ringelement 14 am Lagerbock 17 anliegt. Die Schmierölverteilungsnut 30 kann somit durch das äußere Ringelement 14 und den Lagerbock 17 begrenzt sein und somit einen Fluidkanal zum Transport eines Schmieröles bilden. Weiters kann vorgesehen sein, dass im Lagerbock 17 eine Schmierölbohrung 31 ausgebildet ist, welche die Schmierölverteilungsnut 30 mit einer Außenmantelfläche des Lagerbockes 17 strömungsverbindet. Dies bringt den Vorteil mit sich, dass über die Schmierölverteilungsnut 30 mittels einer Ölpumpe die Gleitlagerpads 18 mit Schmieröl versorgt werden können.

Weiters kann vorgesehen sein, dass die Schmierölbohrung 31 in eine Öltasche 32 einmündet. Die Öltasche 32 kann sich in Axialrichtung des äußeren Ringelementes 14 erstrecken. Weiters kann vorgesehen sein, dass beidseitig der Schmierölverteilungsnut 30 eine Dichtung angeordnet ist, welche zum Abdichten der Schmierölverteilungsnut 30 zwischen dem äußeren Ringelement 14 und dem Lagerbock 17 dient.

Fig. 6 zeigt das Gleitlagerpad 18 in einer ersten perspektivischen Darstellung. Fig. 7 zeigt das Gleitlagerpad 18 aus Fig. 6 in einer Schnittdarstellung.

Wie aus Fig. 6 ersichtlich, ist an einer ersten Umfangsseite 28 des Gleitlagerpads 18 eine Schmieröltransportnut 29 ausgebildet.

Die Schmieröltransportnut 29 ist im Bereich der Lagerfläche 20 ausgebildet. Die Schmieröltransportnut 29 unterbricht die Lagerfläche 20.

Wie aus Fig. 7 ersichtlich, ist vorgesehen, dass die Schmieröltransportnut 29 eine radiale Nuttiefe 33 aufweist. Weiters weist die Schmieröltransportnut 29 eine umfängliche Nuttiefe 34 auf.

Insbesondere kann hierbei vorgesehen sein, dass die Schmieröltransportnut 29 einen radialen Nutgrund 35 und einen umfänglichen Nutgrund 36 aufweist.

Wie besonders gut aus Fig. 6 ersichtlich, ist vorgesehen, dass an einer ersten Stirnseite 37 des Gleitlagerpads 18 ein erstes Nutende 38 ausgebildet ist, welches in einem ersten Abstand 39 von der ersten Stirnseite 37 angeordnet ist.

Wie aus Fig. 6 weiters ersichtlich, ist vorgesehen, dass im Bereich einer zweiten Stirnseite 40 des Gleitlagerpads ein zweites Nutende 41 ausgebildet ist. Das zweite Nutende 41 kann in einem zweiten Abstand 42 von der zweiten Stirnseite 40 angeordnet sein.

Wie aus Fig. 6 weiters ersichtlich, ist vorgesehen, dass im Bereich des ersten Nutendes 38 eine erste Vertiefung 43 ausgebildet ist. Die erste Vertiefung 43 ist in Form einer Vertiefung zur Lagerfläche 22 ausgebildet.

Wie aus Fig. 6 weiters ersichtlich, ist vorgesehen, dass im Bereich des zweiten Nutendes 41 eine zweite Vertiefung 44 ausgebildet ist. Die zweite Vertiefung 44 bildet eine Vertiefung zur Lagerfläche 20.

Wie aus Fig. 6 weiters ersichtlich, kann vorgesehen sein, dass zwischen dem radialen Nutgrund 35 der Schmieröltransportnut 29 und dem ersten Nutende 38 ein erster Übergangsradius 45 ausgebildet ist.

Weiters kann vorgesehen sein, dass zwischen dem radialen Nutgrund 35 und dem zweiten Nutende 41 ein zweiter Übergangsradius 46 ausgebildet ist.

Wie aus Fig. 6 weiters ersichtlich, kann vorgesehen sein, dass zwischen der Schmieröltransportnut 29 und der Lagerfläche 20 ein Schmieröleinzug 51 ausgebildet ist. Wie aus Fig. 6 ersichtlich, kann der Schmieröleinzug 51 gestuft ausgebildet sein und eine erste Abstufungsebene 52, eine zweite Abstufungsebene 53 und eine dritte Abstufungsebene 54 aufweisen. Natürlich können auch mehr oder weniger einzelne Abstufungsebenen ausgebildet sein.

Wie aus Fig. 7 ersichtlich, kann vorgesehen sein, dass die Lagerfläche 20 eine Lagerflächenbogenlänge 47 aufweist. Die Lagerflächenbogenlänge 47 wird in Umfangsrichtung der Lagerfläche 20 gemessen. Insbesondere wird die Lagerflächenbogenlänge 47 am kleinsten Durchmesser der Lagerfläche 20 gemessen.

Wie aus Fig. 6 gut ersichtlich, kann vorgesehen sein, dass die Lagerfläche 20 kugelkalottenförmig ausgebildet ist. Insbesondere kann vorgesehen sein, dass ein Kugelkalottenabschnitt 49 ausgebildet ist, welcher einen Kugelkalottenradius 50 aufweist.

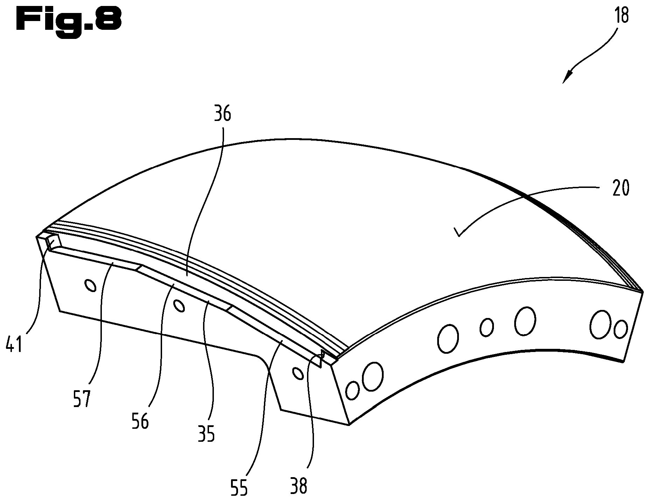

In der Fig. 8 ist eine weitere und gegebenenfalls für sich eigenständige Ausführungsform des Gleitlagerpads 18 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich, kann vorgesehen sein, dass der radiale Nutgrund 35 über dessen Erstreckung hinweg einen ersten Teilbereich 55, einen zweiten Teilbereich 56 und einen dritten Teilbereich 57 aufweist. Natürlich können auch mehr oder weniger einzelne Teilbereiche ausgebildet sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern durch die Ansprüche bestimmt.

**Bezugszeichenaufstellung**

| | | | |
|---|---|---|---|
| 1 | Windkraftanlage | 31 | Schmierölbohrung |
| 2 | Gondel | 32 | Öltasche |
| 3 | Turm | 33 | radiale Nuttiefe |
| 4 | Gondelgehäuse | 34 | umfängliche Nuttiefe |
| 5 | Rotor | 35 | radialer Nutgrund |
| 6 | Rotornabe | 36 | umfänglicher Nutgrund |
| 7 | Rotorblatt | 37 | erste Stirnseite |
| 8 | Rotorlagerung | 38 | erstes Nutende |
| 9 | Gleitlagerung | 39 | erster Abstand |
| 10 | Radialkraft | 40 | zweite Stirnseite |
| 11 | Axialkraft | 41 | zweites Nutende |
| 12 | Kippmoment | 42 | zweiter Abstand |
| 13 | inneres Ringelement | 43 | erste Vertiefung |
| 14 | äußeres Ringelement | 44 | zweite Vertiefung |
| 15 | Gleitlagerelement | 45 | erster Übergangsradius |
| 16 | Rotorwelle | 46 | zweiter Übergangsradius |
| 17 | Lagerbock | 47 | Lagerflächenbogenlänge |
| 18 | Gleitlagerpad | 48 | Außenumfang äußeres Ringele-ment |
| 19 | Rotationsachse | | |
| 20 | Lagerfläche | 49 | Kugelkalottenabschnitt |
| 21 | Gegenfläche | 50 | Kugelkalottenradius |
| 22 | Innenseite | 51 | Schmieröleinzug |
| 23 | Axialstirnseite Lagerbock | 52 | erste Abstufungsebene |
| 24 | Deckel | 53 | zweite Abstufungsebene |
| 25 | Schmierölreservoir | 54 | dritte Abstufungsebene |
| 26 | Schmieröl | 55 | erster Teilbereich radialer Nut-grund |
| 27 | Durchgangsöffnung | | |
| 28 | Umfangsseite | 56 | zweiter Teilbereich radialer Nut-grund |
| 29 | Schmieröltransportnut | | |
| 30 | Schmierölverteilungsnut | | |
| 57 | | | dritter Teilbereich radialer Nutgrund |

## Patentansprüche

1. Gleitlagerpad (18) für eine Gleitlagerung (9), wobei das Gleitlagerpad (18) eine Lagerfläche (20) aufweist,
wobei an einer ersten Umfangsseite (28) des Gleitlagerpads (18) im Bereich der Lagerfläche (20) eine Schmieröltransportnut (29) ausgebildet ist,
wobei das Gleitlagerpad (18) zum Anordnen zwischen einem inneren Ringelement (13) und einem äußeren Ringelement (14) dient, wobei das Gleitlagerpad (18) dazu ausgebildet ist, im Betriebszustand fest mit dem inneren Ringelement (13) gekoppelt zu sein und sich mit diesem relativ zum äußeren Ringelement (14) zu drehen, wobei die Lagerfläche (20) des Gleitlagerpads (18) zur Anlage an einer Gegenfläche (21) des äußeren Ringelements (14) ausgebildet ist, wobei sich die Schmieröltransportnut (29) in einer Axialrichtung des Gleitlagerpads (18) erstreckt, wobei die Schmieröltransportnut (29) ein erstes Nutende (38) aufweist, welches in einem ersten Abstand (39) von einer ersten Stirnseite (37) des Gleitlagerpads (18) angeordnet ist und ein zweites Nutende (41) aufweist, welches in einem zweiten Abstand (42) von einer zweiten Stirnseite (40) des Gleitlagerpads (18) angeordnet ist,
**dadurch gekennzeichnet, dass** zwischen dem ersten Nutende (38) und der ersten Stirnseite (37) des Gleitlagerpads (18) eine erste Vertiefung (43) bezüglich der Lagerfläche (20) ausgebildet ist und wobei zwischen dem zweiten Nutende (41) und der zweiten Stirnseite (40) des Gleitlagerpads (18) eine zweite Vertiefung (44) bezüglich der Lagerfläche (20) ausgebildet ist.

2. Gleitlagerpad (18) nach Anspruch 1, **dadurch gekennzeichnet, dass** die Schmieröltransportnut (29) eine radiale Nuttiefe (33) und eine umfängliche Nuttiefe (34) aufweist, wobei die umfängliche Nuttiefe (34) zwischen 10% und 300%, insbesondere zwischen 20% und 100%, bevorzugt zwischen 60% und 80% der radialen Nuttiefe (33) beträgt.

3. Gleitlagerpad (18) nach Anspruch 1 oder 2, **dadurch gekennzeichnet, dass** ein radialer Nutgrund (35) in einem Nutquerschnitt gesehen als Gerade ausgebildet ist.

4. Gleitlagerpad (18) nach einem der Ansprüche 1 bis 3, **dadurch gekennzeichnet, dass** ein umfänglicher Nutgrund (36) in einem Nutquerschnitt gesehen als Gerade ausgebildet ist.

5. Gleitlagerpad (18) nach einem der Ansprüche 1 bis 4, **dadurch gekennzeichnet, dass** die Schmieröltransportnut (29) am ersten Nutende (38) einen ersten Übergangsradius (45) zum radialen Nutgrund (35) aufweist und dass die Schmieröltransportnut (29) am zweiten Nutende (41) einen zweiten Übergangsradius (46) zum radialen Nutgrund (35) aufweist.

6. Gleitlagerpad (18) nach einem der Ansprüche 1 bis 5, **dadurch gekennzeichnet, dass** die Lagerfläche (20) der einzelnen Gleitlagerpads (18) in einem Kugelkalottenabschnitt (49) die Grundform einer Kugelkalotte mit einem Kugelkalottenradius (50) aufweist.

7. Gleitlagerpad (18) nach einem der Ansprüche 2 bis 6, **dadurch gekennzeichnet, dass** die umfängliche Nuttiefe (34) zwischen 0,5% und 20%, insbesondere zwischen 1,5% und 10%, bevorzugt zwischen 3% und 7% einer Lagerflächenbogenlänge (47) der Lagerfläche (20) beträgt.

8. Gleitlagerpad (18) nach einem der Ansprüche 1 bis 7, **dadurch gekennzeichnet, dass** zwischen der Schmieröltransportnut (29) und der Lagerfläche (20) ein Schmieröleinzug (51) ausgebildet ist.

9. Gleitlagerung (9) umfassend:
- ein inneres Ringelement (13);
- ein äußeres Ringelement (14);
- zumindest ein Gleitlagerelement (15), welches zwischen dem inneren Ringelement (13) und dem äußeren Ringelement (14) angeordnet ist, wobei das Gleitlagerelement (15) zumindest zwei Gleitlagerpads (18) umfasst,
wobei eine Lagerfläche (20) des Gleitlagerpads (18) und eine Gegenfläche (21) des äußeren Ringelements (14) oder eine Gegenfläche (21) des inneren Ringelementes (13) aneinander anliegen,
**dadurch gekennzeichnet, dass**
das Gleitlagerpad (18) nach einem der Ansprüche 1 bis 8 ausgebildet ist.

10. Gleitlagerung (9) nach Anspruch 9, **dadurch gekennzeichnet, dass** an einem Außenumfang (48) des äußeren Ringelementes (14) eine umlaufende Schmierölverteilungsnut (30) ausgebildet ist, wobei in einem Lagerbock (17) eine Schmierölbohrung (31) ausgebildet ist, welche die Schmierölverteilungsnut (30) mit einer Außenmantelfläche des Lagerbockes (17) strömungsverbindet, wobei im Bereich der Gegenfläche (21) die Schmierölbohrung (31) in eine Öltasche (32) einmündet.

11. Gondel (2) für eine Windkraftanlage (1), die Gondel (2) umfassend:
- ein Gondelgehäuse (4);
- eine Rotorwelle (16);
- eine Rotornabe (6), welche an der Rotorwelle (16) angeordnet ist;
- eine Rotorlagerung (8) zur Lagerung der Rotorwelle (16) am Gondelgehäuse (4), **dadurch gekennzeichnet, dass** die Rotorlagerung (8) mehrere Gleitlagerpads (18) nach einem der Ansprüche 1 bis 8 umfasst.

## Claims

1. A slide bearing pad (18) for a slide bearing arrangement (9), wherein the slide bearing pad (18) has a bearing surface (20),
wherein a lubricating oil transport groove (29) is formed on a first circumferential face (28) of the slide bearing pad (18) in the region of the bearing surface (20),
wherein the slide bearing pad (18) serves to be arranged between an inner ring element (13) and an outer ring element (14), wherein the slide bearing pad (18) is configured to be firmly coupled with the inner ring element (13) in the operating mode and to rotate with same relative to the outer ring element (14), wherein the bearing surface (20) of the slide bearing pad (18) is configured to be contact with a mating surface (21) of the outer ring element (14), wherein the lubricating oil transport groove (29) extends in an axial direction of the slide bearing pad (18) , wherein the lubricating oil transport groove (29) has a first groove end (38), which is arranged at a first distance (39) from a first front end (37) of the slide bearing pad (18) and has a second groove end (41), which is arranged at a second distance (42) from a second front end (40) of the slide bearing pad (18),
**characterized in that** a first depression (43) with respect to the bearing surface (20) is configured between the first groove end (38) and the first front end (37) of the slide bearing pad (18) and wherein a second depression (44) with respect to the bearing surface (20) is configured between the second groove end (41) and the second front end (40) of the slide bearing pad (18).

2. The slide bearing pad (18) according to claim 1, **characterized in that** the lubricating oil transport groove (29) has a radial groove depth (33) and a circumferential groove depth (34), wherein the circumferential groove depth (34) is between 10% and 300%, in particular between 20% and 100%, preferably between 60% and 80%, of the radial groove depth (33).

3. The slide bearing pad (18) according to claim 1 or 2, **characterized in that** a radial groove base (35) is configured as a straight line, viewed in a groove cross-section.

4. The slide bearing pad (18) according to any one of the claims 1 to 3, **characterized in that** a circumferential groove base (36) is configured as a straight line, viewed in a groove cross-section.

5. The slide bearing pad (18) according to any one of the claims 1 to 4, **characterized in that** the lubricating oil transport groove (29) has a first transition radius (45) to the radial groove base (35) on the first groove end (38) and that the lubricating oil transport groove (29) has a second transition radius (46) to the radial groove base (35) on the second groove end (41).

6. The slide bearing pad (18) according to any one of the claims 1 to 5, **characterized in that** the bearing surface (20) of the individual slide bearing pads (18), in a spherical cap section (49), has the basic form of a spherical cap with a spherical cap radius (50).

7. The slide bearing pad (18) according to any one of the claims 2 to 6, **characterized in that** the circumferential groove depth (34) is between 0.5% and 20%, in particular between 1.5% and 10%, preferably between 3% and 7%, of a bearing surface arc length (47) of the bearing surface (20).

8. The slide bearing pad (18) according to any one of the claims 1 to 7, **characterized in that** a lubricating oil feeder (51) is configured between the lubricating oil transport groove (29) and the bearing surface (20).

9. A slide bearing arrangement (9), comprising:
- an inner ring element (13);
- an outer ring element (14);
- at least one slide bearing element (15), which is arranged between the inner ring element (13) and the outer ring element (14), wherein the slide bearing element (15) comprises at least two slide bearing pads (18),
wherein a bearing surface (20) of the slide bearing pad (18) and a mating surface (21) of the outer ring element (14), or a mating surface (21) of the inner ring element (13), are in contact with each other,
**characterized in that**
the slide bearing pad (18) is configured according to any one of the claims 1 to 8.

10. The slide bearing arrangement (9) according to claim 9, **characterized in that** a circumferential lubricating oil distribution groove (30) is configured on a circumference (48) of the outer ring element (14), wherein, in a bearing block (17), a lubricating oil bore (31) is configured, which flow-connects the lubricating oil distribution groove (30) with an outer lateral surface of the bearing block (17), wherein the lubricating oil bore (31) opens into in an oil pocket (32) in the region of the mating surface (21).

11. A nacelle (2) for a wind turbine (1), the nacelle (2) comprising:
- a nacelle housing (4);
- a rotor shaft (16);
- a rotor hub (6), which is arranged on the rotor shaft (16);
- a rotor bearing arrangement (8) for mounting the rotor shaft (16) on the nacelle housing (4), **characterized in that** the rotor bearing arrangement (8) comprises multiple slide bearing pads (18) according to any one of the claims 1 to 8.

## Revendications

1. Patin de palier lisse (18) pour un palier lisse (9), le patin de palier lisse (18) présentant une surface portante (20),
une rainure de transport d'huile lubrifiante (29) étant formée sur un premier côté périphérique (28) du patin de palier lisse (18) dans la zone de la surface portante (20),
le patin de palier lisse (18) servant à être agencé entre un élément annulaire intérieur (13) et un élément annulaire extérieur (14), le patin de palier lisse (18) étant conçu pour être couplé de manière fixe à l'élément annulaire intérieur (13) lorsqu'il est en état de marche et pour tourner avec celui-ci par rapport à l'élément annulaire extérieur (14), la surface porteuse (20) du patin de palier lisse (18) étant conçue pour venir en appui contre une surface opposée (21) de l'élément annulaire extérieur (14), la rainure de transport d'huile lubrifiante (29) s'étendant dans une direction axiale du patin de palier lisse (18), la rainure de transport d'huile lubrifiante (29) présentant une première extrémité de rainure (38) qui est agencée à une première distance (39) d'une première face frontale (37) du patin de palier lisse (18) et une deuxième extrémité de rainure (41) qui est agencée à une deuxième distance (42) d'une deuxième face frontale (40) du patin de palier lisse (18),
**caractérisé en ce qu'**entre la première extrémité de rainure (38) et la première face frontale (37) du patin de palier lisse (18), un premier renfoncement (43) est formé par rapport à la surface portante (20) et un deuxième renfoncement (44) étant formé entre la deuxième extrémité de rainure (41) et la deuxième face frontale (40) du patin de palier lisse (18) par rapport à la surface portante (20).

2. Patin de palier lisse (18) selon la revendication 1, **caractérisé en ce que** la rainure de transport d'huile lubrifiante (29) présente une profondeur de rainure radiale (33) et une profondeur de rainure périphérique (34), la profondeur de rainure périphérique (34) étant comprise entre 10 % et 300 %, en particulier entre 20 % et 100 %, de préférence entre 60 % et 80 % de la profondeur de rainure radiale (33).

3. Patin de palier lisse (18) selon la revendication 1 ou 2, **caractérisée en ce qu'**un fond de rainure radial (35) est formé comme une ligne droite vue dans une section transversale de la rainure.

4. Patin de palier lisse (18) selon l'une des revendications 1 à 3, **caractérisé en ce qu'**un fond de rainure périphérique (36) est réalisé sous forme de ligne droite vue dans une section transversale de la rainure.

5. Patin de palier lisse (18) selon l'une des revendications 1 à 4, **caractérisé en ce que** la rainure de transport d'huile lubrifiante (29) présente, à la première extrémité de rainure (38), un premier rayon de transition (45) vers le fond de rainure radial (35) et **en ce que** la rainure de transport d'huile lubrifiante (29) présente, à la deuxième extrémité de rainure (41), un deuxième rayon de transition (46) vers le fond de rainure radial (35).

6. Patin de palier lisse (18) selon l'une des revendications 1 à 5, **caractérisés en ce que** la surface portante (20) des patins de palier lisse individuels (18) présente, dans une partie en calotte sphérique (49), la forme de base d'une calotte sphérique avec un rayon de calotte sphérique (50).

7. Patin de palier lisse (18) selon l'une des revendications 2 à 6, **caractérisés en ce que** la profondeur de rainure périphérique (34) est comprise entre 0,5 % et 20 %, en particulier entre 1,5 % et 10 %, de préférence entre 3 % et 7 % d'une longueur d'arc (47) de la surface portante (20).

8. Patin de palier lisse (18) selon l'une des revendications 1 à 7, **caractérisés en ce qu'**une rainure d'aspiration d'huile lubrifiante (51) est formée entre la rainure de transport d'huile lubrifiante (29) et la surface portante (20).

9. Palier lisse (9) comprenant :
- un élément annulaire intérieur (13) ;
- un élément annulaire extérieur (14) ;
- au moins un élément de palier lisse (15) qui est agencé entre l'élément annulaire intérieur (13) et l'élément annulaire extérieur (14), l'élément de palier lisse (15) comprenant au moins deux patins de palier lisse (18),
- une surface portante (20) du patin de palier lisse (18) et une surface opposée (21) de l'élément annulaire extérieur (14) ou une surface opposée (21) de l'élément annulaire intérieur (13) étant en appui l'une contre l'autre,
**caractérisé en ce que**
le patin de palier lisse (18) est réalisé selon l'une des revendications 1 à 8.

10. Palier lisse (9) selon la revendication 9,
**caractérisée en ce qu'**une rainure périphérique (30) de répartition d'huile lubrifiante est formée sur une périphérie extérieure (48) de l'élément annulaire extérieur (14), un alésage (31) pour l'huile lubrifiante étant formé dans un support de palier (17), lequel alésage relie la rainure de répartition d'huile lubrifiante (30) avec une surface d'enveloppe extérieure du support de palier (17), l'alésage d'huile lubrifiante (31) débouchant dans une poche d'huile (32) dans la zone de la surface opposée (21).

11. Nacelle (2) pour une éolienne (1), la nacelle (2) comprenant :
- un boîtier de nacelle (4) ;
- un arbre de rotor (16) ;
- un moyeu de rotor (6) qui est agencé sur l'arbre de rotor (16) ;
- un palier de rotor (8) pour le montage de l'arbre de rotor (16) sur le boîtier de nacelle (4), **caractérisé en ce que** le palier de rotor (8) comprend plusieurs patins de palier lisse (18) selon l'une des revendications 1 à 8.
